# EUROPÄISCHE PATENTSCHRIFT

(11) **EP 4 279 297 B1**
(45) Veröffentlichungstag und Bekanntmachung des Hinweises auf die Patenterteilung: **21.05.2025**
(21) Anmeldenummer: 23163375.1
(22) Anmeldetag: 22.03.2023
(51) Int. Cl.: B60C 13/00

(54) **FAHRZEUGREIFEN MIT EINER SEITENWANDSCHRAFFUR**
VEHICLE TYRE HAVING A CORRUGATED SIDEWALL
PNEU DE VÉHICULE DOTÉ D'UNE PAROI LATÉRALE HACHURÉE

(30) Priorität: 17.05.2022 DE 102022204887
(43) Veröffentlichungstag der Anmeldung: 22.11.2023
(73) Patentinhaber: Continental Reifen Deutschland GmbH, 30175 Hannover (DE)
(72) Erfinder: Kristen, Florian, 30165 Hannover (DE); Kuniak, Lubos, 30165 Hannover (DE)
(74) Vertreter: Continental Corporation

(56) Entgegenhaltungen:
- EP-A1- 3 427 977
- DE-T5- 112019 000 586
- JP-A- 2007 320 469

## Beschreibung

Die Erfindung betrifft einen Fahrzeugreifen mit einer Seitenwand mit einer Seitenwandschraffur in einem kreisringförmigen Umfangsabschnitt und mit einem zumindest ein Zeichen enthaltenden Feld, welches außerhalb des/der Zeichen von einer Basisschraffur aus nebeneinander verlaufenden Rippen bedeckt ist, wobei das/die Zeichen mit einer Außenfläche versehen ist/sind, deren Gestaltung von der Basisschraffur abweicht und welche insbesondere schraffurfrei oder glatt ausgeführt ist, wobei an das Zeichen enthaltende Feld in Umfangsrichtung zumindest ein Designfeld anschließt.

Ein derartiger Fahrzeugreifen ist beispielsweise aus der JP 2007 320 469 A bekannt, wobei der Fahrzeugreifen als zum Stand der Technik gehörend angeführt ist. Dieser Reifen weist eine Seitenwand mit einer Seitenwandschraffur mit einem Umfangsabschnitt mit einem Zeichen enthaltenden Feld auf, welches außerhalb der Zeichen von einer Basisschraffur eingenommen ist. An das Zeichen enthaltende Feld schließt in jeder Umfangsrichtung je ein Designfeld an.

Die DE 11 2019 000 586 B4 offenbart einen Fahrzeugluftreifen mit einer Seitenwand mit einer Seitenwandschraffur mit zwei jeweils Zeichen enthaltenden Feldern, welche außerhalb der Zeichen jeweils von einem glatten Flächenbereich eingenommen sind. Zwischen den Zeichen enthaltenden Feldern verläuft in Umfangsrichtung ein ringförmiges Designfeld, welches sich auch radial innerhalb der die Zeichen enthaltenden Felder erstreckt. Im Designfeld ist ein von einem glatten Oberflächenbereich umlaufener, rechteckförmiger, zweidimensionaler Code mit einem Punktmuster aus zwei Arten von Graustufenelementen ausgebildet, wobei die zwei Arten von Graustufenelementen aufgrund ihrer ungleichmäßigen Oberflächenbeschaffenheit voneinander unterscheidbar sind. Ein derart ausgeführter zweidimensionaler Code soll eine fortlaufend gute Lesbarkeit aufweisen.

Ferner ist in der EP 1 859 963 B1 als zum Stand der Technik gehörend ein Reifen mit einem Umfangsabschnitt auf der Seitenwand offenbart, welcher mit einer Schraffur aus weitgehend parallel zueinander verlaufenden Rippen versehen ist und welcher ein Textfeld bildet, in welchem der Schriftzug TIRE mit einer unschraffierten, daher weitgehend glatten Außenfläche seiner Schriftzeichen ausgebildet ist. Unter abrupter Abgrenzung schließen an das Textfeld unschraffierte Seitenwandflächen an. Aus der US 5,303,758 B ist ein Fahrzeugreifen mit einer Seitenwandschraffur bekannt, welche kreisringförmig die Seitenwand umläuft und ein erstes, eine Hintergrundschraffur bildendes Muster aus einer Vielzahl von in radialer Richtung geradlinig verlaufenden Rippen aufweist. An zumindest einer Stelle dieses Musters ist ein zweites Muster eingebettet, welches beispielsweise aus den Schriftzeichen eines Schriftzuges besteht. Auch das zweite Muster besteht aus einer Vielzahl von geradlinig und weitgehend parallel zueinander verlaufenden Rippen, die jedoch einen von den Rippen des ersten Musters abweichenden Querschnitt aufweisen und unter einem Winkel von 45° bis 90° relativ zu den Rippen des ersten Musters verlaufen.

Aus der EP 2 842 766 B1 ist ein Fahrzeugreifen mit einem dekorativen Seitenwandmuster bekannt, welches eine Vielzahl von nebeneinander, weitgehend parallel zueinander verlaufenden Rippen aufweist, die eine Basisschraffur bilden. Zur Basisschraffur gehörende Rippen sind unter übereinstimmend großen Winkeln abgelenkt und bilden derart örtlich begrenzt Flächenelemente aus, welche dreidimensionale Formen bzw. Körper simulieren, welche die Basisschraffur unterbrechen. Auf diese Weise ist es möglich, eine Vielzahl dreidimensionaler Geometrien oder dreidimensionaler Körper nachzubilden bzw. vorzutäuschen.

Der Erfindung liegt die Aufgabe zu Grunde, bei einem Fahrzeugreifen der eingangs genannten Art an das Zeichen enthaltende, mit der Basisschraffur versehene Feld ohne abrupte Abgrenzung zu diesem ein mit von der Basisschraffur abweichende Schraffuren aufweisendes Muster ausbilden zu können.

Gelöst wird die gestellte Aufgabe erfindungsgemäß dadurch, dass das Designfeld einen an das Zeichen enthaltende Feld angrenzenden Übergangsabschnitt aufweist, wobei sich im Übergangsabschnitt die Basisschraffur in Flächenelementen auf nicht abgelenkte Weise fortsetzt und wobei zwischen diesen Flächenelementen weitere schraffierte Flächenelemente vorhanden sind, in welchen abgelenkte Abschnitte von nebeneinander verlaufenden Rippen aus der Basisschraffur die Schraffur bilden.

Die Erfindung schafft einen fließenden Übergang von der Basisschraffur, die in dem Zeichen enthaltenden Feld ausgebildet ist, in ein anschließendes Designfeld, indem in einem Übergangsabschnitt Flächenelemente mit der fortgesetzten Basisschraffur bestehen bleiben. Die Erfindung eröffnet dabei auch die Möglichkeit, den Übergangsabschnitt auf verschiedene Weise auszugestalten. Gemäß der Erfindung ausgeführte Seitenwandschraffuren sind ferner besonders gut dafür geeignet, Unebenheiten auf der Seitenwand zu kaschieren.

Bei einer bevorzugten Ausführung verlaufen die unmittelbar an das die/das Zeichen enthaltende Feld im Übergangsabschnitt anschließenden weiteren schraffierten Flächenelemente parallel zu den Rändern des Umfangsabschnittes und es sind diese Flächenelemente streifenförmig gestaltet. Dadurch wird ein besonders auffallender fließender Übergang zwischen der Basisschraffur vom Zeichen enthaltenden Feld in das Designfeld geschaffen.

In diesem Zusammenhang ist es besonders vorteilhaft, wenn im Übergangsabschnitt an die weiteren schraffierten Flächenelemente jeweils zweite und an diese gegebenenfalls noch weitere schraffierte Flächenelemente anschließen, in welchen jeweils abgelenkte Abschnitte von nebeneinander verlaufenden Rippen aus der Basisschraffur verlaufen, die insbesondere streifenförmig gestaltet sind und unter jeweils vorzugsweise stumpfen Winkeln aneinander anschließen, wobei die Basisschraffur in den zwischen ihnen befindlichen Flächenelementen fortgesetzt ist.

Auch der Übergang vom Übergangsabschnitt in Designstrukturen im Designfeld soll fließend und ohne abrupte Änderungen des Designs erfolgen. Gemäß einer bevorzugten Ausführung geht daher der Übergangsabschnitt in von Flächenelementen umlaufende Designstrukturen über, wobei diese Flächenelemente sämtlich von abgelenkten Abschnitten von Rippen aus der Basisschraffur gebildet sind.

Bevorzugt ist ferner eine Ausführung, bei welcher die eine Designstruktur bildenden Flächenelemente ein Flächenelement umlaufen, welches mit Rippen gemäß der Basisschraffur bedeckt ist. Die Basisschraffur ist daher nach wie vor in den Designstrukturen des Designfeldes vorhanden, wodurch sich, auch bei komplett gestalteten Designstrukturen, eine gewisse Einheitlichkeit der gesamten Seitenwandschraffur ergibt.

Bei einer weiteren bevorzugten Ausführung verlaufen die aus den Rippen der Basisschraffur abgelenkten Abschnitte in den Flächenelementen in radialer Richtung. Je nach der Ausrichtung der Flächenelemente relativ zur radialen Richtung ergeben sich dadurch unterschiedliche Abstände zwischen den abgelenkten Abschnitten der Rippen in den einzelnen Flächenelementen und dadurch unterschiedliche Licht-/Schatteneffekte, die für eine gute Erkennbarkeit der Flächenelemente und der Designstrukturen von besonderem Vorteil ist.

Die Ausgestaltung der Rippen trägt ebenfalls zu besonderen Licht-/Schatteneffekten und zu Dunkel-/Helleffekten in der Seitenwandschraffur bei. Von besonderem Vorteil ist dabei, wenn die Rippen inklusive ihrer abgelenkten Abschnitte im Querschnitt und gegenüber einem Basisniveau eine Höhe aufweisen, die 0,30 mm bis 0,60 mm, insbesondere in der Größenordnung von 0,40 mm, beträgt. Die Rippen, die im Querschnitt im Wesentlichen dreieckförmig sind, weisen ferner bevorzugt Spitzenbereiche mit einer Breite von 0,10 mm bis 0,20 mm auf und sind mit seitlichen Flanken versehen, die jeweils unter einem Winkel von 20° bis 45° zu einer Senkrechten auf das Basisniveau verlaufen.

In der Basisschraffur ist es von Vorteil, wenn die Rippen derart verlaufen, dass sie am Basisniveau unmittelbar aneinander anschließen. Dies hat vor allem im Zeichen enthaltenden Feld den Effekt, dass sich die Zeichen gegenüber der Basisschraffur besonders gut abheben können.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 einen Umfangsabschnitt einer Seitenwand eines Fahrzeugreifens mit einer Seitenwandschraffur,
Fig. 2 das in Fig. 1 mit D gekennzeichnete Detail in vergrößerter Darstellung und
Fig. 3 einen vergrößerten Schnitt entlang der Linie III-III der Fig. 2.

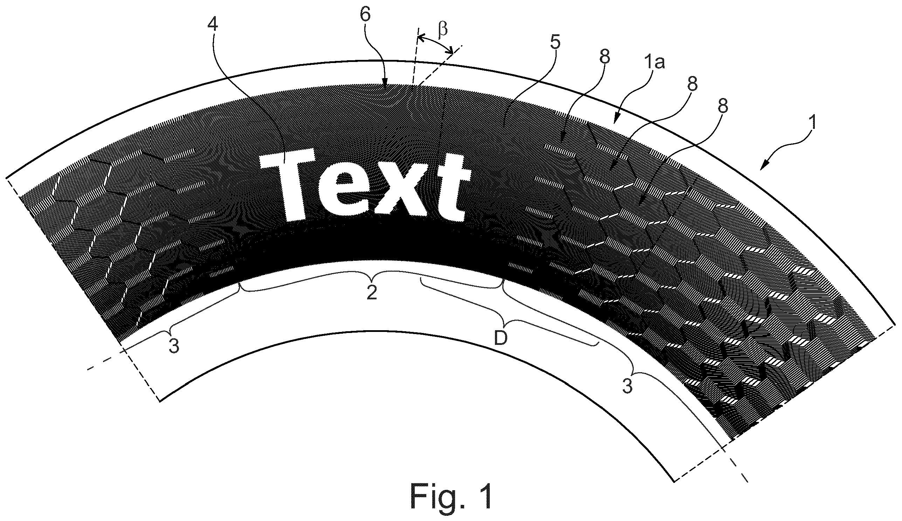

Fig. 1 zeigt schematisch eine in die Ebene projizierte Ansicht eines Umfangsabschnittes einer Seitenwand 1 eines Fahrzeugreifens, welcher ein Reifen beliebiger Bauart, insbesondere ein Radialreifen, und ferner ein Reifen beliebigen Typs, insbesondere ein Reifen für Kraftwagen, wie Personenkraftwagen, Light-Trucks oder Nutzfahrzeuge, ist.

Fig. 1 zeigt einen Abschnitt 1a eines Kreisringes mit einer aus Rippen 5 gebildeten Seitenwandschraffur, welche den Abschnitt 1a bedeckt. Der dargestellte Abschnitt 1a ist vorzugsweise ein Bestandteil eines die Seitenwand 1 kreisringförmig umlaufenden Gesamtdesigns.

Der Abschnitt 1a weist in radialer Richtung eine Breite auf, die je nach Reifendimension und Reifentyp in der Größenordnung von 1,50 cm bis 50,00 cm beträgt und enthält ein zumindest ein Zeichen 4 enthaltendes Feld 2 und an dieses anschließend je ein Designfeld 3, wobei von jedem Designfeld 3 lediglich ein Umfangsabschnitt dargestellt ist. Das Zeichen 4 enthaltende Feld 2 ist beim gezeigten Ausführungsbeispiel ein Umfangsabschnitt des Abschnittes 1a und verläuft über einen Zentriwinkel von 5° bis 90°. Das Feld 2 enthält im Beispiel als Zeichen 4 Schriftzeichen, die das Wort TEXT bilden. Anstelle von Schriftzeichen, kann das Feld andere Zeichen, wie Ziffern, Ziffernfolgen, Logos und sonstige bildliche Darstellungen enthalten. Die Umfangserstreckung bzw. der Zentriwinkel des Feldes 2 wird insbesondere an die Zeichengrößen und die Zeichenanzahl angepasst.

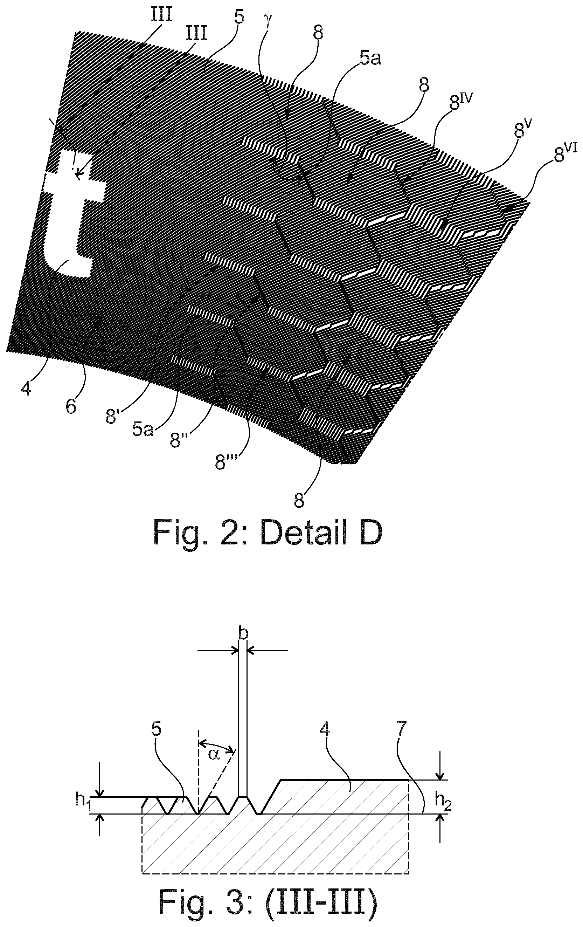

Die Rippen 5 der Seitenwandschraffur weisen grundsätzlich, wie es Fig. 3 zeigt, einen im Wesentlichen dreieckigen oder dreieckähnlichen Querschnitt, gegenüber einem Basisniveau 7 eine Höhe h₁, die 0,30 mm bis 0,60 mm, insbesondere in der Größenordnung von 0,40 mm, beträgt, Spitzenbereiche mit einer Breite b von 0,10 mm bis 0,25 mm und seitliche Flanken auf, die jeweils unter einem Winkel α von 20° bis 45° zu einer Senkrechten auf das Basisniveau 7 verlaufen. Rippen 5, die nahe des äußeren Randes des Abschnittes 1a verlaufen, weisen breitere Spitzenbereiche und etwas größer dimensionierte Winkel α auf als Rippen 5, die nahe des inneren Randes des Abschnittes 1a verlaufen.

Das Zeichen 4 enthaltende Feld 2 ist außerhalb des/der Zeichen 4 von einer Basisschraffur 6 bedeckt, in welcher die Rippen 5 nebeneinander, insbesondere weitgehend parallel zueinander und weitgehend geradlinig vom radial äußeren bis zum radial inneren Rand des Abschnittes 1a und unter einem Winkel β von 20° bis 50° relativ zur radialen Richtung orientiert verlaufen. In der Basisschraffur 6 schließen die Rippen 5 bevorzugt unmittelbar aneinander an, wie es in Fig. 3 gezeigt ist. Bei einer alternativen Ausführung verlaufen die Rippen 5 am Basisniveau 6 unter einem gegenseitigen Abstand von 0,10 mm bis 0,20 mm.

Die Zeichen 4 sind Erhebungen mit einer glatten Außenfläche und einer vom Basisniveau 7 ermittelten Höhe h₂, die um 0,30 mm bis 0,50 mm größer ist als die Höhe h₁ der Rippen 5. Von ihrer Dimensionierung her sind die Zeichen 4 derart gestaltet, dass sie auf der Seitenwand 1 gut erkennbar sind, die Wahl der Dimensionierung ist dem Fachmann überlassen. In jedem Fall übersteigt die Breite der Zeichenbestandteile die Dimensionen der Rippen 5 um ein Vielfaches.

Wie Fig. 1 und Fig. 2 zeigen, setzt sich in den Designfeldern 3, die an das die Zeichen 4 enthaltende Feld 2 anschließen, die Basisschraffur 6 vorerst in einem Übergangsabschnitt in Flächenelementen 8 fort, derart, dass ein fließender Übergang von der Basisschraffur 6 des Feldes 2 zu einer Kombination von schraffierten Flächenelementen 8, in welchen die Basisschraffur 6 fortgesetzt ist und schraffierten Flächenelementen 8', 8", 8‴, in welchen abgelenkte Abschnitte 5a von Rippen 5 aus der Basisschraffur 6 verlaufen, geschaffen ist.

Die unmittelbar an das Feld 2 anschließenden Flächenelemente 8' sind parallel zu den Randkanten des Abschnittes 1a streifenförmig gestaltet und enthalten, wie erwähnt, in radialer Richtung verlaufende Abschnitte 5a aus nebeneinander verlaufenden Rippen 5 aus der Basisschraffur 6. Diese streifenförmigen Flächenelemente 8' weisen beispielsweise in Umfangsrichtung der Seitenwand 1 eine Erstreckung von einigen Millimetern, beispielsweise 5,00 mm bis 20,00 mm, auf, ihre Breite in radialer Richtung beträgt in der Größenordnung von 1,00 mm bis 5,00 mm. Zwischen den streifenförmigen Flächenelementen 8' und ggf. in Teilbereichen dieser Flächenelemente 8' bei den Randkanten des Abschnittes 1a befinden sich die erwähnten, aus der Basisschraffur 6 gebildeten Flächenelemente 8. An die ersten streifenförmigen Flächenelemente 8' schließen weitere, zur radialen Richtung schräg verlaufende zweite streifenförmigen Flächenelemente 8" an, die unter einem stumpfen Winkel γ von 120° bis 160° zu den ersten Flächenelementen 8' verlaufen und ebenfalls in radialer Richtung verlaufende Abschnitte 5a aus nebeneinander verlaufenden Rippen 5 aus der Basisschraffur 6 enthalten. Dritte streifenförmigen Flächenelemente 8‴, welche im Beispiel analog zu den ersten Flächenelementen 8' ausgeführt sind, schließen an die schräg verlaufenden zweiten Flächenelemente 8" an. Auch zwischen den zweiten Flächenelementen 8" und den dritten Flächenelementen 8‴ ist die Basisschraffur 6 fortgesetzt.

Von den dritten streifenförmigen Flächenelementen 8‴ zweigen jeweils zwei vierte Flächenelemente 8^{IV} ab, die mit weiteren, parallel zu den Randkanten des Abschnittes 1a orientierten streifenförmigen Flächenelementen 8^{V} und an diese anschließenden Flächenelementen 8^{VI} ein Muster aus in Umfangsrichtung der Seitenwand 1 im Wesentlichen langgestreckten sechseckigen Designstrukturen ergeben. In sämtlichen Flächenelementen 8' bis 8^{VI} verlaufen in radialer Richtung orientierte, parallel ausgerichtete Abschnitte 5a von Rippen 5 aus der zugrundeliegenden Basisschraffur 6. Die Flächenelemente 8 innerhalb der "Sechsecke" sind gemäß der Basisschraffur 6 schraffiert, derart, als wäre in den Designfeldern 3 die Basisschraffur 6 wie im Feld 2 vorhanden und durch die abgelenkten Abschnitte 5a in den Flächenelemente 8' bis 8^{VI} lediglich unterbrochen.

Wie Fig. 1 zeigt, werden die Breiten der Flächenelemente 8^{IV}, 8^{V}, 8^{VI} schrittweise größer, je weiter die Flächenelemente 8^{IV}, 8^{V}, 8^{VI} vom Feld 2 entfernt sind, sodass sich die sechseckigen Designstrukturen weiterentwickeln bzw. entsprechend ändern. Die jeweilige Ausgestaltung der Flächenelemente in den Designfeldern 3 sorgt für unterschiedliche gegenseitige Abstände der Abschnitte 5a in den Flächenelementen 8' bis 8^{VI} und bestimmt die Gestalt der Designstrukturen.

Nachdem die Seitenwand 1 des Fahrzeugreifens in Draufsicht eine Kreisringgestalt aufweist, ändern sich zwischen dem radial äußeren und dem radial inneren Rand des Abschnittes 1a gegenseitige Abstände und Dimensionen von Rippen 5 und Abschnitten 5a und die äußeren Dimensionen der Flächenelemente 8 bis 8^{VI} entsprechend.

Bei einer weiteren, nicht dargestellten Ausführung ist oberhalb und/oder unterhalb der Zeichen 4 im Feld 2 durch abgelenkte Abschnitte 5a der Rippen 5 ebenfalls ein Muster gebildet. Der fließende Übergang von der Basisschraffur 6 im Feld 2 in schraffierte Flächenelemente 8' bis 8^{VI} aus abgelenkten Abschnitten 5a in den anschließenden Designfeldern 3 kann auf andere als die dargestellte Weise erfolgen, insbesondere kann ein gänzlich anders gestaltetes Muster, beispielsweise ein Muster aus regelmäßigen Sechsecken, aus Dreiecken und dergleichen entstehen bzw. ausgebildet werden. Die abgelenkten Abschnitte in den Flächenelementen können auch abweichend von der radialen Richtung verlaufen. Beispielsweise kann sich die Basisschraffur aus in radialer Richtung verlaufenden Rippen zusammensetzen, die abgelenkten Abschnitte verlaufen dann abweichend von der radialen Richtung.

### Bezugszeichenliste

- 1: Seitenwand
- 1a: Abschnitt
- 2: Zeichen enthaltendes Feld
- 3: Designfeld
- 4: Zeichen
- 5: Rippe
- 5a: Abschnitt
- 6: Basisschraffur
- 7: Basisniveau
- 8 bis 8^{VI}: Flächenelement
- α, β, γ: Winkel
- b: Breite
- D: Detail
- h₁, h₂: Höhe

## Patentansprüche

1. Fahrzeugreifen mit einer Seitenwand (1) mit einer Seitenwandschraffur in einem kreisringförmigen Umfangsabschnitt (1a) und mit einem zumindest ein Zeichen (4) enthaltenden Feld (2), welches außerhalb des/der Zeichen (4) von einer Basisschraffur (6) aus nebeneinander verlaufenden Rippen (5) bedeckt ist, wobei das/die Zeichen (4) mit einer Außenfläche versehen ist/sind, deren Gestaltung von der Basisschraffur (6) abweicht und welche insbesondere schraffurfrei oder glatt ausgeführt ist, wobei an das Zeichen (4) enthaltende Feld (2) in Umfangsrichtung zumindest ein Designfeld (3) anschließt,
**dadurch gekennzeichnet,**
**dass** das Designfeld (3) einen an das Zeichen (4) enthaltende Feld (2) angrenzenden Übergangsabschnitt aufweist, wobei sich im Übergangsabschnitt die Basisschraffur (6) in Flächenelementen (8) auf nicht abgelenkte Weise fortsetzt und wobei zwischen diesen Flächenelementen (8) weitere schraffierte Flächenelemente (8', 8", 8‴) vorhanden sind, in welchen abgelenkte Abschnitte (5a) von nebeneinander verlaufenden Rippen (5) aus der Basisschraffur (6) die Schraffur bilden.

2. Fahrzeugreifen nach Anspruch 1, **dadurch gekennzeichnet, dass** die unmittelbar an das Feld (2) im Übergangsabschnitt anschließenden weiteren schraffierten Flächenelemente (8') parallel zu den Rändern des Umfangsabschnittes (1a) verlaufen und streifenförmig gestaltet sind.

3. Fahrzeugreifen nach Anspruch 1 oder 2, **dadurch gekennzeichnet, dass** im Übergangsabschnitt an die weiteren schraffierten Flächenelemente (8') jeweils zweite und an diese ggf. noch weitere schraffierte Flächenelemente (8", 8‴) anschließen, in welchen jeweils abgelenkte Abschnitte (5a) von nebeneinander verlaufenden Rippen (5) aus der Basisschraffur (6) verlaufen, die insbesondere streifenförmig gestaltet sind und unter Winkeln (γ) aneinander anschließen, wobei die Basisschraffur (6) in den zwischen ihnen befindlichen Flächenelementen (8) fortgesetzt ist.

4. Fahrzeugreifen nach einem der Ansprüche 1 bis 3, **dadurch gekennzeichnet, dass** der Übergangsabschnitt in von Flächenelementen (8^{IV}, 8^{V}, 8^{VI}) umlaufene Designstrukturen übergeht, wobei diese Flächenelemente (8^{IV}, 8^{V}, 8^{VI}) sämtlich von abgelenkten Abschnitten (5a) von Rippen (5) aus der Basisschraffur (6) gebildet sind.

5. Fahrzeugreifen nach Anspruch 4, **dadurch gekennzeichnet, dass** die eine Designstruktur bildenden Flächenelemente (8^{IV}, 8^{V}, 8^{VI}) ein Flächenelement (8) umlaufen, welches mit Rippen (5) gemäß der Basisschraffur (6) bedeckt ist.

6. Fahrzeugreifen nach Anspruch 4 oder 5, **dadurch gekennzeichnet, dass** die Designstrukturen ein Muster aus von Flächenelementen (8^{IV}, 8^{V}, 8^{VI}) gebildeten Sechsecken bilden.

7. Fahrzeugreifen nach einem oder mehreren der Ansprüche 1 bis 6, **dadurch gekennzeichnet, dass** die Rippen (5) in der Basisschraffur (6) unter einem Winkel (β) von 20° bis 60° zur radialen Richtung verlaufen.

8. Fahrzeugreifen nach einem oder mehreren der Ansprüche 1 bis 7, **dadurch gekennzeichnet, dass** die aus den Rippen (5) der Basisschraffur (6) abgelenkten Abschnitte (5a) in den Flächenelementen (8' bis 8^{VI}) in radialer Richtung verlaufen.

9. Fahrzeugreifen nach einem oder mehreren der Ansprüche 1 bis 8, **dadurch gekennzeichnet, dass** die Rippen (5) inklusive ihrer abgelenkten Abschnitte (5a) im Querschnitt und gegenüber einem Basisniveau (7) eine Höhe (h₁), die 0,30 mm bis 0,60 mm, insbesondere in der Größenordnung von 0,40 mm, beträgt, aufweisen, ferner Spitzenbereiche mit einer Breite (b) von 0,10 mm bis 0,25 mm und seitliche Flanken besitzen, die jeweils unter einem Winkel (α) von 20° bis 45° zu einer Senkrechten auf das Basisniveau (7) verlaufen.

10. Fahrzeugreifen nach einem oder mehreren der Ansprüche 1 bis 9, **dadurch gekennzeichnet, dass** die Rippen (5) in der Basisschraffur (6) am Basisniveau (7) unmittelbar aneinander anschließen.

## Claims

1. Vehicle tyre with a sidewall (1) with sidewall hatching in an annular circumferential portion (1a) and with an area (2) containing at least one symbol (4) that, outside the symbol(s) (4), is covered by a base hatching (6) composed of adjacently extending ribs (5), wherein the symbol(s) (4) is/are provided with an outer surface of a design different from the base hatching (6) and formed in particular to be without hatching or smooth, wherein the area (2) containing the symbol (4) is adjoined in the circumferential direction by at least one design area (3),
**characterized**
**in that** the design area (3) has a transition portion which adjoins the area (2) containing the symbol(s) (4), wherein, in the transition portion, the base hatching (6) continues in surface elements (8) without diversion, and wherein, between said surface elements (8), there are further hatched surface elements (8', 8", 8‴) in which diverted portions (5a) of adjacently extending ribs (5) from the base hatching (6) form the hatching.

2. Vehicle tyre according to Claim 1, **characterized in that** the further hatched surface elements (8') directly adjoining the area (2) in the transition portion extend parallel to the boundaries of the circumferential portion (1a) and are designed in a strip-shaped manner.

3. Vehicle tyre according to Claim 1 or 2, **characterized in that** the further hatched surface elements (8') are adjoined in the transition portion by in each case second, and the latter are adjoined possibly by yet further, hatched surface elements (8", 8‴) in which there extend in each case diverted portions (5a) of adjacently extending ribs (5) from the base hatching (6), these being designed in particular in a strip-shaped manner and adjoining one another at angles (γ), wherein the base hatching (6) is continued in the surface elements (8) situated therebetween.

4. Vehicle tyre according to one of Claims 1 to 3, **characterized in that** the transition portion transitions into design structures around which surface elements (8^{IV}, 8^{V}, 8^{VI}) extend, wherein said surface elements (8^{IV}, 8^{V}, 8^{VI}) are all formed by diverted portions (5a) of ribs (5) from the base hatching (6).

5. Vehicle tyre according to Claim 4, **characterized in that** the surface elements (8^{IV}, 8^{V}, 8^{VI}) forming a design structure extend around a surface element (8) which is covered by ribs (5) according to the base hatching (6).

6. Vehicle tyre according to Claim 4 or 5, **characterized in that** the design structures form a pattern composed of hexagons formed by surface elements (8^{IV}, 8^{V}, 8^{VI}).

7. Vehicle tyre according to one or more of Claims 1 to 6, **characterized in that** the ribs (5) in the base hatching (6) extend at an angle (β) of 20° to 60° to the radial direction.

8. Vehicle tyre according to one or more of Claims 1 to 7, **characterized in that** the portions (5a) diverted from the ribs (5) of the base hatching (6) extend in the surface elements (8' to 8^{VI}) in the radial direction.

9. Vehicle tyre according to one or more of Claims 1 to 8, **characterized in that** the ribs (5), including their diverted portions (5a), in cross section and in relation to a base level (7), have a height (h₁) which is 0.30 mm to 0.60 mm, in particular in the region of 0.40 mm, and furthermore have tip regions with a width (b) of 0.10 mm to 0.25 mm and side flanks which in each case extend at an angle (α) of 20° to 45° to a perpendicular to the base level (7).

10. Vehicle tyre according to one or more of Claims 1 to 9, **characterized in that** the ribs (5) in the base hatching (6) directly adjoin one another at the base level (7).

## Revendications

1. Pneumatique pour véhicule comprenant un flanc (1) avec un hachurage de flanc dans une partie périphérique circulaire (1a) et avec un champ (2) contenant au moins un caractère (4), lequel est recouvert à l'extérieur du/des caractère(s) (4) par des hachures de fond (6) constituées de nervures adjacentes (5), le ou les caractères (4) étant pourvus d'une surface extérieure dont la présentation diffère de celle du hachurage de fond (6) et qui est notamment exempte de hachures ou est lisse, au moins une zone de dessin (3) étant adjacente dans la direction circonférentielle à la zone (2) contenant le caractère (4),
**caractérisé**
**en ce que** la zone de dessin (3) comprend une partie de transition adjacente à la zone (2) contenant le caractère (4), le hachurage de fond (6) se prolongeant dans la partie de transition en formant des éléments de surface (8) non déviés, et d'autres éléments de surface hachurés (8', 8", 8"') sont présents entre ces éléments de surface (8), dans lesquels des parties déviées (5a) de nervures (5) adjacentes forment le hachurage à partir du hachurage de fond (6).

2. Pneumatique pour véhicule selon la revendication 1, **caractérisé en ce que** les autres éléments de surface hachurés (8') qui se raccordent directement au champ (2) dans la partie de transition s'étendent parallèlement aux bords de la partie périphérique (1a) et sont conçus sous forme de bandes.

3. Pneumatique pour véhicule selon la revendication 1 ou la revendication 2, **caractérisé en ce que** dans la partie de transition, les autres éléments de surface hachurés (8') sont respectivement reliés à des deuxièmes éléments de surface hachurés (8", 8"'), dans lesquelles des sections déviées (5a) de nervures (5) s'étendant côte à côte partent du hachurage de base (6), qui sont en particulier en forme de bandes et se rejoignent en formant des angles (γ), les hachures de fond (6) se poursuivant dans les éléments de surface (8) situés entre elles.

4. Pneumatique pour véhicule selon l'une des revendications 1 à 3, **caractérisé en ce que** la partie de transition se fond en des structures de dessin entourées d'éléments de surface (8^{IV}, 8^{V}, 8^{VI}), ces éléments de surface (8^{IV}, 8^{V}, 8^{VI}) étant tous formés par des parties déviées (5a) de nervures (5) issues du hachurage de fond (6).

5. Pneumatique pour véhicule selon la revendication 4, **caractérisé en ce que** les éléments de surface (8^{IV}, 8^{V}, 8^{VI}) formant une structure de dessin entourent un élément de surface (8) qui est recouvert de nervures (5) selon le hachurage de fond (6).

6. Pneumatique pour véhicule selon la revendication 4 ou la revendication 5, **caractérisé en ce que** les structures de dessin forment un motif d'hexagones constitués d'éléments de surface (8^{IV}, 8^{V}, 8^{VI}).

7. Pneumatique pour véhicule selon une ou plusieurs des revendications 1 à 6, **caractérisé en ce que** les nervures (5) dans le hachurage de base (6) s'étendent selon un angle (β) de 20° à 60° par rapport à la direction radiale.

8. Pneumatique pour véhicule selon une ou plusieurs des revendications 1 à 7, **caractérisé en ce que** les parties (5a) déviées des nervures (5) du hachurage de fond (6) s'étendent dans le sens radial dans les éléments de surface (8' à 8^{VI}).

9. Pneumatique pour véhicule selon une ou plusieurs des revendications 1 à 8, **caractérisé en ce que** les nervures (5), y compris leurs parties déviées (5a), présentent en section transversale et par rapport à un niveau de base (7) une hauteur (h₁) qui est comprise entre 0,30mm et 0,60mm, en particulier de l'ordre de 0,40mm, comprenant en outre des zones de crête d'une largeur (b) comprise entre 0,10mm et 0,25mm et des flancs latéraux qui s'étendent chacun selon un angle (α) allant de 20° à 45° par rapport à une perpendiculaire au niveau de base (7).

10. Pneumatique pour véhicule selon une ou plusieurs des revendications 1 à 9, **caractérisé en ce que** les nervures (5) se raccordent directement les unes aux autres dans le hachurage de fond (6) au niveau de base (7).
